# EUROPÄISCHE PATENTANMELDUNG

(11) **EP 1 895 652 A2**
(43) Veröffentlichungstag der Anmeldung: **05.03.2008**
(21) Anmeldenummer: 07115003.1
(22) Anmeldetag: 27.08.2007
(51) Int. Cl.: H02P 29/02

(54) **Verfahren zur Steuerung eines Motors**

(30) Priorität: 04.09.2006 DE 102006000443
(71) Anmelder: HILTI Aktiengesellschaft, 9494 Schaan (LI)
(72) Erfinder: Müller, Thomas, 86863, Unterrothan (DE); Stempfhuber, Johannes, 86899, Landsberg (DE); Meiendres, Germar, 86875, Waal (DE); Baxivanelis, Konstantin, 86916, Kaufering (DE); Looser, Markus, 86899, Landsberg (DE)
(74) Vertreter: Wildi, Roland

(57) **Zusammenfassung**

Bei einem Verfahren zur Steuerung eines Motors (2), der ein scheibenförmiges Werkzeug (4) eines Werkzeuggerätes (1) antreibt und an dem in einer Ein-Position eines Motorschalters (6) eine Motorspannung in der Höhe eines Nennwertes anliegt, wird in einem ersten Schritt ein am Motor (2) anliegender aktueller Motorstrom (IM) ermittelt und mit einem ersten vorgegebenen Grenzwert (GW1) verglichen und bei Detektion einer erfüllten Überlastbedingung in einem zweiten Schritt ein Steuervorgang zum Schutz des Motors (2) selbsttätig ausgelöst. Es ist vorgesehen, dass die Überlastbedingung durch die Überschreitung des ersten vorgegebenen Grenzwertes (GW1) über eine erste vorgegebene Grenzzeitspanne (grDt1) hinweg gegeben ist und im zweiten Schritt die am Motor (2) anliegende Motorspannung um ein von einem Benutzer detektierbares Mass auf einen Drosselwert herabgesetzt wird.

## Beschreibung

Die Erfindung betrifft ein Verfahren zur Steuerung eines Motors sowie ein Werkzeuggerät, wie insbesondere eine handgeführte Kreissäge, mit einer Steuereinrichtung zur Durchführung des Verfahrens. Der Motor treibt in einer Ein-Position eines Motorschalters ein scheibenförmiges Werkzeug des Werkzeuggerätes an. Hierbei liegt am Motor eine Motorspannung in der Höhe eines Nennwertes an. Der Nennwert kann dabei im Wesentlichen fest sein oder von einer das Werkzeuggerät versorgenden Akku- oder Netzspannung abhängen. In jedem Fall wird in einem ersten Schritt ein am Motor anliegender aktueller Motorstrom ermittelt und mit einem ersten vorgegebenen Grenzwert verglichen. Bei Detektion einer erfüllten Überlastbedingung wird dann in einem zweiten Schritt ein Steuervorgang zum Schutz des Motors vor einer Überlastung selbsttätig ausgelöst.

Derartige Steuerungsverfahren dienen zum Schutz der betreffenden Werkzeuggeräte gegen eine Überlastung des Motors. Diese Überlastung tritt beispielsweise auf, wenn das scheibenförmige Werkzeug zu schnell beziehungsweise mit zu grosser Anpresskraft gegenüber dem zu bearbeitenden Material bewegt wird. Dies führt auf Grund des erhöhten Widerstandsmomentes zu einer Erwärmung des Motors, die nach einer gewissen Dauer zu dessen Zerstörung führen kann.

Aus der JP 4348809 ist eine stationäre Sägemaschine mit scheibenförmigem Werkzeug zum Schneiden von wickelbarem Material bekannt, die im Betrieb eine Relativbewegung des Werkzeuges gegenüber dem wickelbarem Material selbsttätig erzeugt. Ein Motor zum Antrieb des Werkzeuges wird dabei vor einer Überlastung geschützt, indem ein an diesem anliegender Motorstrom überwacht wird. Sobald dieser Motorstrom einen vorgegebenen Grenzwert übersteigt, wird die Vorwärtsbewegung des Werkzeuges gegenüber dem Material reduziert.

Durch diesen bekannten Steuervorgang kann ein schadhaftes Erwärmen des Motors vermieden werden.

Diese bekannte Vorgehensweise setzt jedoch eine gesteuerte Relativbewegung des Werkzeuges gegenüber dem zu bearbeitenden Material voraus und ist somit nicht für handgeführte Werkzeuggeräte, wie Kreissägen geeignet.

Der vorliegenden Erfindung liegt die Aufgabe zugrunde, ein Steuerverfahren bereit zu stellen, das auch für handgeführte Werkzeuggeräte geeignet ist.

Erfindungsgemäss wird die Aufgabe dadurch gelöst, dass die Überlastbedingung durch die Überschreitung des ersten vorgegebenen Grenzwertes über eine erste vorgegebene Grenzzeitspanne hinweg definiert ist. Ist diese Überlastbedingung erfüllt, so wird im zweiten Schritt der Steuervorgang zum Schutz des Motors durchgeführt, bei dem die am Motor anliegende Motorspannung und damit die Motorleistung um ein von einem Benutzer erkennbares Mass auf einen Drosselwert herabgesetzt wird. In Reaktion auf diese spürbare Herabsetzung der Motorspannung beziehungsweise der Motorleistung wird der Benutzer das Werkzeuggerät reflexartig zurückziehen, so dass das Werkzeug wieder im Wesentlichen frei ist und auch mit vermindertem Motorstrom wieder anlaufen kann.

Vorteilhafterweise beträgt der Drosselwert höchstens 75%, insbesondere 40 bis 60% des Nennwertes. Hierdurch wird die Motorleistung des Motors in einem Masse herabgesetzt, das vom Benutzer sicher wahrgenommen wird, insbesondere da das Werkzeug infolge der reduzierten Leistung üblicherweise zum Stillstand kommt. Zudem kann bei diesem Wert eine weitere Erwärmung des Motors ausgeschlossen werden.

In einer besonders bevorzugten Vorgehensweise wird in einem dritten Schritt die Motorspannung gegenüber dem Drosselwert wieder erhöht, wobei die Motorspannung und damit auch die Leistung des Motors frühestens nach Ablauf einer vorgegebenen Drosselungsdauer wieder den Nennwert erreicht. Hierdurch kann das Handwerkzeuggerät im Falle einer Überlastung des Motors selbsttätig die Leistung reduzieren und auch wieder hoch fahren, ohne dass hierzu der Motorschalter aus der Ein-Position in eine Aus-Position und wieder zurück bewegt werden muss. Auf diese Weise kann der durch die simulierte Blockierung hervorgerufene Arbeitszeitverlust minimiert werden.

Vorteilhafterweise beträgt die Drosselungsdauer höchstens 1 sec, insbesondere 0,2 bis 0,7 sec, wodurch einerseits genug Zeit für das reflexartige Zurückziehen des Werkzeuggerätes bleibt aber andererseits die Motorspannung beziehungsweise die Leistung des Motors zumindest wieder annähernd auf Höhe des Nennwertes ist, bevor der Benutzer bewusst den Motorschalter aus der Ein-Stellung löst. Auf diese Weise geht die durch die simulierte Blockierung verursachte Verzögerung der Arbeitszeit gegen Null.

Bevorzugterweise beträgt die erste Grenzzeitspanne höchstens 1 sec, insbesondere 0,2 bis 0,7 sec, wodurch einerseits eine ungewollte Blockierung durch kurzzeitige Spitzen der Motorleistung, wie beispielsweise beim Anlaufen des Motors, verhindert werden gleichzeitig aber die Dauer von Überlastungen derart beschränkt werden, dass daraus resultierende Beschädigungen des Motors verhindert werden.

Vorteilhafterweise wird im ersten Schritt der aktuelle Motorstrom zusätzlich mit einem zweiten Grenzwert verglichen, der höher ist als der erste Grenzwert. Bei Detektion der Überschreitung des zweiten Grenzwertes über eine zweite vorgegebene Grenzzeitspanne hinweg, die kleiner ist als die erste vorgegebene Grenzzeitspanne, wird dann im zweiten Schritt die die Motorspannung auf den Drosselwert herabgesetzt. Hierdurch können zwei unterschiedliche Überlastbedingungen definiert werden, von denen die eine durch die grössere Überlastung und die andere durch die längere Grenzzeitspanne geprägt ist. Hierdurch kann die Steuerung besonders gut an unterschiedliche Betriebsbedingungen des Werkzeuggerätes angepasst werden.

In einer vorteilhaften Ausführungsform wird die Leistung des Motors durch Pulsweitenmodulation herabgesetzt, wodurch die Leistung des Motors im Falle einer Überlastung zuverlässig und exakt reduziert wird.

Ferner ist es besonders günstig, wenn in einem vierten Schritt Überlastereignisse hochgezählt werden, die jeweils innerhalb eines vorgegebenen Grenzzeitraumes auf das jeweils vorhergehende Überlastereignis folgen. Die Überlastereignisse sind dabei immer dann gegeben, wenn die die Überlastbedingung erfüllt ist und somit der zweite Schritt durchgeführt wird. Zudem wird bei einem vorbestimmten Wert der hochgezählten Überlastereignisse in einem fünften Schritt der Motor abgeschaltet. Auf diese Weise kann der Motor wirkungsvoll vor einer Beschädigung in Folge von wiederkehrenden Überlastungen geschützt werden, die beispielsweise durch ein permanentes, überhöhtes Anpressen des Sägeplattes durch den Benutzer entstehen können.

Zudem wird die Aufgabe durch ein Werkzeuggerät mit einer Steuereinrichtung zur Durchführung des Verfahrens in einer der oben genannten Ausgestaltungen gelöst.

Dabei ist es günstig, wenn wenigstens der erste und der zweite, vorzugsweise aber alle fünf Schritte, von einer Elektronikeinrichtung durchgeführt werden, um einen exakten Ablauf des Steuerungsverfahrens zu ermöglichen.

Die Erfindung wird nachstehend anhand eines Ausführungsbeispieles näher erläutert. Es zeigen:
- Fig. 1: einen Aufbau einer Steuereinrichtung eines Werkzeuggerätes zur Durchführung eines erfindungsgemässen Steuerungsverfahrens für einen zum Antrieb eines Werkzeuges vorgesehenen Motor und
- Fig. 2: einen beispielhaften Verlauf eines Motorstromes des Motors bei Verwendung des erfindungsgemässen Steuerungsverfahrens.

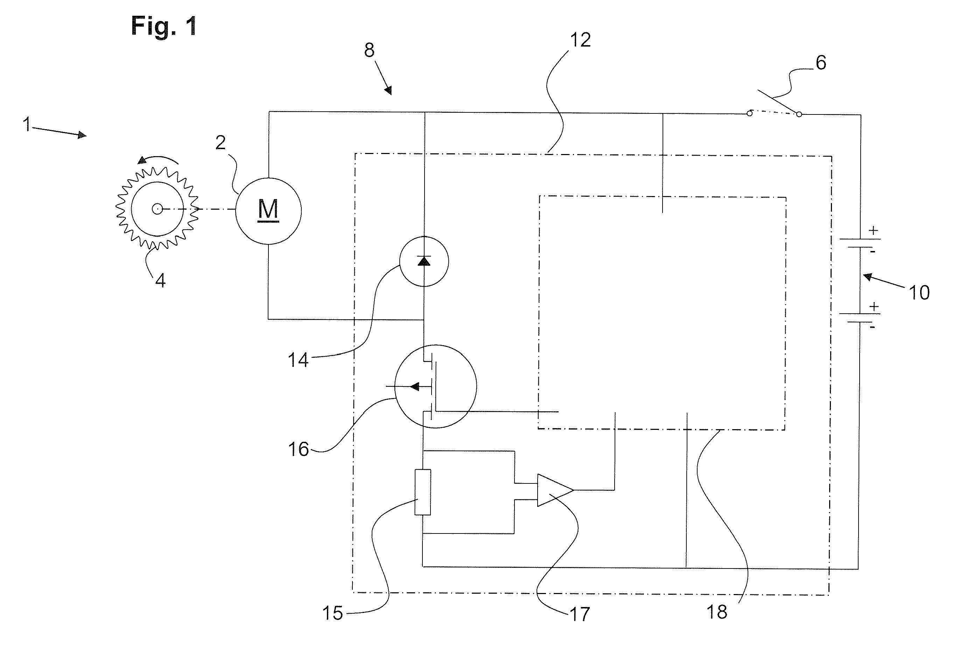

Fig. 1 zeigt ein Werkzeuggerät 1 in Form einer Handkreissäge mit einem Motor 2, über den ein scheibenförmiges Werkzeug 4 in Form eines Sägeblattes mit einer Nennleistung antreibbar ist. Hierzu wird an dem Motor 2 eine Motorspannung in Höhe eines Nennwertes angelegt. Der Motor 2 ist mittels eines Schalters 6 einer insgesamt mit 8 bezeichneten Steuereinrichtung ein- und ausschaltbar. Der Schalter 6 ist hierzu zwischen einer dargestellten Aus-Position und einer strichpunktiert dargestellten Ein-Position verstellbar. In der Ein-Position wird dabei eine von einem Akku 10 erzeugte Akkuspannung an dem Motor 2 angelegt.

Die Steuereinrichtung 8 weist eine Elektronikeinrichtung 12 auf, die eine Schutzdiode 14, einen shunt in Form eines niedrigohmigen Widerstandes 15, einen elektronischen Leistungsschalter 16, einen Operationsverstärker 17 und eine Steuerungseinheit 18 umfasst. Durch den Widerstand 15 und den Operationsverstärker 17 der Elektronikeinrichtung 12 wird ein im Betrieb am Motor 2 auftretender Motorstrom IM permanent ermittelt. In Abhängigkeit von dem ermittelten Motorstrom IM kann über die Steuereinrichtung 8 und den elektronischen Leistungsschalter 16 mittels Pulsweitenmodulation die Motorspannung und damit die Leistung des Motors 2 reduziert werden, um hierdurch den Motorstrom IM zu senken und den Motor 2 vor einer Überlastung zu schützen.

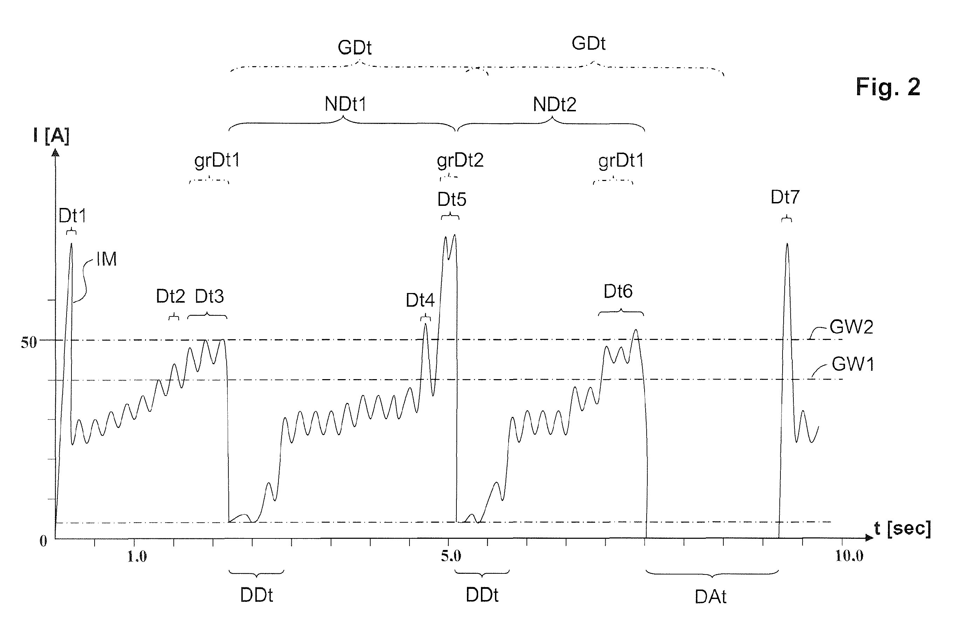

In Fig. 2 ist beispielhaft ein Verlauf des Motorstromes IM bei Verwendung des erfindungsgemässen Steuerungsverfahrens dargestellt. Wie hieraus hervorgeht, sind dabei ein erster Grenzwert GW1 von 40 A und ein zweiter Grenzwert GW2 von 50 A für den Motorstrom IM durch die Elektronikeinrichtung 12 festgelegt.

In einem ersten Schritt des Steuerungsverfahrens detektiert die Elektronikeinrichtung 12 Zeitspannen Dt, während denen der Motorstrom IM über den vorgegebenen Grenzwerten GW1 und GW2 liegt. Bezüglich des ersten Grenzwertes GW1 werden dabei die ermittelten Zeitspannen Dt mit einer ersten Grenzzeitspanne grDt1 von höchstens 1 sec, bevorzugterweise 0,2 bis 0,7 sec und bezüglich des zweiten Grenzwertes GW2 mit einer zweiten Grenzzeitspanne grDt2 von 0,01 bis 0,2 sec, insbesondere 0,015 bis 0,025 sec verglichen, die zusammen mit den beiden Grenzwerten GW1 und GW2 jeweils eine Überlastbedingung definieren. Aus Gründen der besseren Darstellbarkeit wurde hierbei für das Beispiel nach Fig. 2 die zweite Grenzzeitspanne grDt2 mit 0,2 sec gewählt.

Übersteigt der ermittelte Motorstrom IM, wie im dargestellten Beispiel während den Zeitspannen Dt3 und Dt6, den ersten Grenzwert GW1 länger als die vorgegebene erste Grenzzeitspanne grDt1 oder, wie im dargestellten Beispiel während der Zeitspanne Dt5, den zweiten Grenzwert GW2 länger als die vorgegebene zweite Grenzzeitspanne grDt2, so ist eine der von der Elektronikeinrichtung 12 vorgegebenen Überlastbedingungen erfüllt. Als Folge hiervon wird die Leistung des Motors 2 in einem zweiten Schritt des Steuerungsverfahrens durch die Elektronikeinrichtung 12 mittels Pulsweitenmodulation auf 40 bis 60% der Nennleistung reduziert.

In einem dritten Schritt wird dann die Motorspannung und damit die Leistung des Motors 2 von dem Drosselwert wieder selbsttätig erhöht, bevor der Benutzer den Schalter 6 bewusst in die Aus-Position bringt beziehungsweise bevor er den Schalter 6 frei geben kann, damit dieser beispielsweise durch Federwirkung selbsttätig in die Aus-Position verbracht wird. Hierbei wird die Motorspannung von dem Drosselwert erst während einer Drosselungsdauer DDt von höchstens 1 sec, bevorzugterweise 0,2 bis 0,7 sec, wieder allmählich auf den Nennwert erhöht. Auf diese Weise wird sicher gestellt, dass der Motor 2 nach Erfüllung einer Überlastbedingung zu dessen Schutz vor temperaturbedingten Schäden in seiner Leistung selbsttätig heruntergefahren und anschliessend auch wieder auf die annähernd volle Nennleistung hochgefahren wird, bevor der Benutzer den Schalter 6 bewusst betätigen kann. Auf diese Weise bleibt der Arbeitsvorgang weitestgehend ungestört, so dass es zu keinem wesentlichen Arbeitszeitverlust kommt.

Beim Starten des Motors 2 durch Betätigung des Schalters 6 beziehungsweise beim Wiederanlaufen gemäss dem dritten Schritt wird über eine gewisse Anlaufzeit hinweg die Überwachung der beiden Grenzwerte GW1, GW2 deaktiviert, um die Erfüllung der Überlastbedingungen durch reine Anlaufpeaks auszuschliessen.

Ferner ist in dem Steuerungsverfahren ein vierter Schritt vorgesehen, in dem ein Nachfolgezeitraum NDt erfasst wird, der jeweils auf ein Überlastereignis, bei dem die Überlastbedingung erfüllt wurde, folgt und der maximal bis zu dem jeweils nachfolgenden Überlastereignis dauert. Ist ein solcher Nachfolgezeitraum NDt kürzer als ein vorgegebener Grenzzeitraum GDt, so wird ein aktueller Wert einer Zähllogik um eins erhöht. Erreicht der Wert dieser Zähllogik, der somit einer bestimmten Anzahl von direkt aufeinander folgenden Überlastereignissen entspricht, dabei einen vorbestimmten Grenzwert, wie beispielsweise drei, entsprechend dem gezeigten Beispiel, so wird der Motor (2) in einem fünften Schritt vollständig abgeschaltet.

Überschreitet dagegen ein solcher Nachfolgezeitraum NDt den Grenzzeitraum GDt, so wird der aktuelle Wert der Zähllogik vermindert.

Bei dem beispielhaften Verlauf gemäss Fig. 2 folgt auf das Überlastereignis nach der Zeitspanne Dt3 der Nachfolgezeitraum NDt1, der bis zu dem Überlastereignis nach der Zeitspanne Dt5 dauert. Da der ermittelte Nachfolgezeitraum NDt1 kürzer ist als der vorgegebene Grenzzeitraum GDt, wird der Wert der Zähllogik, nachdem er durch das erste Überlastereignis nach der Zeitspanne Dt3 von Null auf eins erhöht worden war, durch das nachfolgende Überlastereignis nach der Zeitspanne Dt5 noch einmal um eins auf zwei erhöht.

Auch der nächste Nachfolgezeitraum NDt2, der bis zu dem Überlastereignis nach der Zeitspanne Dt6 dauert, ist kürzer als der Grenzzeitraum GDt. Somit wird der Wert der Zähllogik noch einmal um eins auf drei erhöht. Da hierdurch nun der vorgegebene Grenzwert von drei erreicht wird, schaltet die Elektronikeinrichtung 12 den Motor 2 nun vollständig ab, um den Motor 2 vor ständig wiederkehrenden Überlastungen zu schützen.

Der Benutzer muss nun den Schalter 6 zunächst in die Aus-Position verbringen beziehungsweise zurückkehren lassen und anschliessend zurück in die Ein-Position verbringen, um den Motor 2 erneut in Gang setzen zu können. Hierdurch entsteht eine Ausschaltdauer DAt, während der der Motor 2 abkühlen kann.

## Patentansprüche

1. Verfahren zur Steuerung eines Motors (2), der ein scheibenförmiges Werkzeug (4) eines Werkzeuggerätes (1) antreibt und an dem in einer Ein-Position eines Motorschalters (6) eine Motorspannung in Höhe eines Nennwertes anliegt,
wobei in einem ersten Schritt ein am Motor (2) anliegender aktueller Motorstrom (IM) ermittelt und mit einem ersten vorgegebenen Grenzwert (GW1) verglichen und
bei Detektion einer erfüllten Überlastbedingung in einem zweiten Schritt ein Steuervorgang zum Schutz des Motors (2) selbsttätig ausgelöst wird,
**dadurch gekennzeichnet, dass** die Überlastbedingung durch die Überschreitung des ersten vorgegebenen Grenzwertes (GW1) über eine erste vorgegebene Grenzzeitspanne (grDt1) hinweg gegeben ist und
im zweiten Schritt die am Motor (2) anliegende Motorspannung um ein von einem Benutzer detektierbares Mass auf einen Drosselwert herabgesetzt wird.

2. Verfahren nach Anspruch 1, **dadurch gekennzeichnet, dass** der Drosselwert höchstens 75% des Nennwertes beträgt.

3. Verfahren nach Anspruch 1 oder 2, **dadurch gekennzeichnet, dass** in einem dritten Schritt die Motorspannung gegenüber dem Drosselwert wieder erhöht wird, wobei die Motorspannung frühestens nach Ablauf einer vorgegebenen Drosselungsdauer (DDt) wieder den Nennwert erreicht.

4. Verfahren nach Anspruch 3, **dadurch gekennzeichnet, dass** die Drosselungsdauer (DDt) höchstens 1 sec beträgt.

5. Verfahren nach einem der Ansprüche 1 bis 4, **dadurch gekennzeichnet, dass** die erste Grenzzeitspanne (grDt1) höchstens 1 sec beträgt.

6. Verfahren nach einem der Ansprüche 1 bis 5, **dadurch gekennzeichnet, dass** im ersten Schritt der aktuelle Motorstrom (IM) zusätzlich mit einem zweiten Grenzwert (GW2) verglichen wird, der höher ist als der erste Grenzwert (GW1), und
bei Detektion der Überschreitung des zweiten Grenzwertes (GW2) über eine zweite vorgegebene Grenzzeitspanne (grDt2) hinweg, die kleiner ist als die erste vorgegebene Grenzzeitspanne (grDt1), im zweiten Schritt die Motorspannung auf den Drosselwert herabgesetzt wird.

7. Verfahren nach einem der Ansprüche 1 bis 6, **dadurch gekennzeichnet, dass** die Leistung des Motors (2) durch Pulsweitenmodulation herabgesetzt wird.

8. Verfahren nach einem der Ansprüche 1 bis 7, **dadurch gekennzeichnet, dass** in einem vierten Schritt Überlastereignisse, bei denen die Überlastbedingungen erfüllt sind, hochgezählt werden, wenn diese innerhalb eines vorgegebenen Grenzzeitraumes aufeinander folgen, und
bei einer vorbestimmten Anzahl von hochgezählten Überlastereignissen in einem fünften Schritt der Motor (2) abgeschaltet wird.

9. Werkzeuggerät mit einer Steuereinrichtung (8) zur Durchführung des Verfahrens nach einem der Ansprüche 1 bis 8.

10. Werkzeuggerät nach Anspruch 9, **dadurch gekennzeichnet, dass** wenigstens der erste und der zweite Schritt des Verfahrens von einer Elektronikeinrichtung (12) durchgeführt werden.
